(19) **Europäisches Patentamt European Patent Office Office européen des brevets**

(11) **EP 4 470 819 B1**

(12) **EUROPEAN PATENT SPECIFICATION**

(45) Date of publication and mention
of the grant of the patent:
**24.06.2026 Bulletin 2026/26**

(51) International Patent Classification (IPC):
**B60L 15/20** (2006.01)    **B62D 6/00** (2006.01)
**B62D 7/15** (2006.01)

(21) Application number: **23176084.4**

(52) Cooperative Patent Classification (CPC):
**B60L 15/20;** B62D 6/002; B62D 7/1509

(22) Date of filing: **30.05.2023**

(54) **FOUR-WHEEL INDEPENDENT STEERING CONTROL APPARATUS AND METHOD**

VIERRAD-INDEPENDENT-LENKSTEUERVORRICHTUNG UND -VERFAHREN

APPAREIL ET PROCÉDÉ DE COMMANDE DE DIRECTION INDEPENDET À QUATRE ROUES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**04.12.2024 Bulletin 2024/49**

(73) Proprietor: **Hyundai Mobis Co., Ltd.
Gangnam-gu
Seoul 06141 (KR)**

(72) Inventor: **DIALYNAS, Georgios
65760 Eschborn (DE)**

(74) Representative: **Frenkel, Matthias Alexander
Wuesthoff & Wuesthoff
Patentanwälte und Rechtsanwalt PartG mbB
Schweigerstraße 2
81541 München (DE)**

(56) References cited:
**US-A1- 2020 368 629**

• **DANIEL J GONZALEZ ET AL: "Dynamics and
Aerial Attitude Control for Rapid Emergency
Deployment of the Agile Ground Robot AGRO",
ARXIV.ORG, CORNELL UNIVERSITY LIBRARY,
201 OLIN LIBRARY CORNELL UNIVERSITY
ITHACA, NY 14853, 5 July 2020 (2020-07-05),
XP081716469**
• **MAYR JOHANNES ET AL: "Mechatronic design
of a self-balancing three-dimensional inertia
wheel pendulum", MECHATRONICS., vol. 30, 1
September 2015 (2015-09-01), GB, pages 1 - 10,
XP055886233, ISSN: 0957-4158, DOI: 10.1016/
j.mechatronics.2015.04.019**

## Description

## BACKGROUND

FIELD

Exemplary embodiments of the present disclosure relate to a four-wheel independent steering control apparatus and method.

DISCUSSION OF THE BACKGROUND

Most recently released vehicles are designed to support front drive and Ackerman steering, and do not support torque vectoring or independent steering of the left and right wheels.

In order to steer a vehicle in mid-air and avoid the risk of abnormal touchdown, torque vectoring and independent steering of the left and right wheels are required.

In electric vehicles provided with the torque vectoring function and the Ackerman steering function, the pitch motion thereof in the air may be affected. However, yaw and roll motions are unaffected, since the yaw and roll motions may not be affected unless the steering configuration of the wheel is changed.

The background art of the present disclosure is disclosed in Korean Patent 10-2274120 (published on July 1, 2021; Control Device and Method for Rear Wheel Steering System).

A conventional way of controlling aerial attitude of a four-wheel independent drive and steering robot is described by DANIEL J GONYALEZ ET AL: "Dynamics and Aerial Attitude Control for Rapid Emergency Deployment of the Agile Ground Robot AGRO", ARXIV. ORG, CORNELL UNIVERSITY LIBARARY, 201 OLIN LIBRARY CORNELL UNIVERSITY ITHACA, NY 14853, 5 July 2020. When the accelerometer detects no acceleration, it considers itself to be in freefall, takes command away from the user and changes to the free-falling orientation control state. While in the freefall state, the robot immediately sets the wheels to equalize authority over both pitch and roll.

## SUMMARY

Various embodiments are directed to a four-wheel independent steering control apparatus and method allowing wheel torques and steering geometries of a vehicle to be adjusted in mid-air. According to the present invention, a four-wheel independent steering control apparatus and a four-wheel independent steering control method are provided in the independent claims.

According to an aspect of the present disclosure, the four-wheel independent steering control apparatus includes: wheel steering modules configured to independently steer respective wheels of a vehicle; and a processor configured to detect a mid-air state on the basis of measured information of the vehicle and adjust propulsion torques and steering geometries of the wheels according to the mid-air state by means of the wheel steering modules.

The measured information may include at least one from among acceleration, speed of rotation, wheel angles, torques, a distance of the vehicle from the ground.

The processor may set a front right wheel and a rear left wheel to be a first wheel pair, set a front left wheel and a rear right wheel to be a second wheel pair, instruct a symmetric movement of the first wheel pair and the second wheel pair, and divide a steering motion of the first wheel pair and the second wheel pair into a first sub-movement in which the first wheel pair and the second wheel pair move in opposite directions and a second sub-movement in which the first wheel pair and the second wheel pair move in the same direction.

The processor includes: a calculator configured to determine at least one mid-air state of a free-fall state and a hovering state on the basis of at least one of acceleration and a distance of the vehicle from the ground included in the measured information, set wheel positions according to the wheel topology corresponding to the determined mid-air state, and calculate the relationship between the wheels and vehicle's body torques on the basis of the set wheel positions. The processor may further a controller configured to calculate torques applied across vehicle's body on the basis of a difference between a desired states vector and an output states vector of a vehicle's body plant mode; and an application part configured to calculate wheel torques by applying the calculated torques applied across vehicle's body to the relationship between the wheels and the vehicle's body torques, calculate the calculated wheel torques and torques included in the measured information, and apply the calculated torques to the vehicle's body plant model.

The wheel topology includes second wheel topology in which the first sub-movement is 45° and the second sub-movement is 0° and fourth wheel topology in which the first sub-movement is 45° and the second sub-movement is 45°.

The first topology may be configured to control a pitch motion without affecting directions of yaw and roll, wherein the front right wheel and the rear left wheel are 0°, while the front left wheel and the rear right wheel RR are 0°. The second wheel topology may equalize authority over the pitch and roll (y' axis and x' axis) by adjusting the first sub-movement and control the yaw motion by adjusting the second sub-movement, wherein the front right wheel and the rear left wheel are 45°, while the front left wheel and the rear right wheel are -45°. The third topology may change orthogonal control authority over the pitch (y axis) and control the yaw motion (z axis) of a vehicle base by adjusting the second sub-movement, wherein the front right wheel and the rear left wheel are -45°, while the front left wheel and the rear right wheel are -45°. The fourth topology may change orthogonal control authority over the roll (x axis) and the pitch (y axis) and control the yaw motion (z axis) of the vehicle base by adjusting the second sub-movement, wherein the front right wheel and the rear left wheel are 0° ($\delta_1 = \delta_3 = 0°$), while the front left wheel and the rear right wheel are -90°.

When a value of the z-axis acceleration (axxz) is 0, the calculator determines the mid-air state to be the free-fall state and the wheel topology to be second wheel topology. When the distance of the vehicle from the ground is equal to or greater than a predetermined vehicle height limit threshold and is maintained a predetermined threshold time or longer, the calculator determines the mid-air state to be the hovering state and the wheel topology to be fourth wheel topology.

The application part may inverse the relationship between the wheels and the vehicle's body torques and apply torques applied across a vehicle's body to the inversed relationship.

According to an aspect of the present disclosure, the four-wheel independent steering control method includes: detecting, by a processor, a mid-air state on the basis of measured information of a vehicle; setting, by the processor, wheel positions according to the mid-air state; calculating, by the processor, a relationship between wheels and vehicle's body torques on the basis of the set wheel positions and inversing the calculated relationship; and calculating wheel torques by applying torques applied across a vehicle's body to the inversed relationship.

In the setting of the wheel positions, when the mid-air state is a free-fall state, the processor determines the wheel topology to be second wheel topology and sets the wheel positions according to the second wheel topology, and when the mid-air state is a hovering state, the processor determines the wheel topology to be fourth wheel topology and sets the wheel positions according to the fourth wheel topology.

The four-wheel independent steering control apparatus and method according to an aspect of the present disclosure may adjust the direction of the vehicle (the directions of the wheels) in mid-air by adjusting the wheel torques and the steering geometries in mid-air. Touchdown parallel to the ground and load distribution proportional to four wheels may be ensured. The risk of landing upside down in the touchdown may be minimized. The reliability of the vehicle may be improved, and thus steering correction efforts required to the driver may be minimized.

## BRIEF DESCRIPTION OF THE DRAWINGS

FIG. 1 is a diagram illustrating a four-wheel independent steering control apparatus according to an embodiment of the present disclosure;

FIG. 2 is a diagram illustrating the configuration of the processor illustrated in FIG. 1;

FIG. 3 is a diagram illustrating the controller and the application part illustrated in FIG. 2;

FIGS. 4A to 4D are example diagrams illustrating wheel topology according to an embodiment of the present disclosure; and

FIG. 5 is a flowchart illustrating a four-wheel independent steering control method according to an embodiment of the present disclosure.

## DETAILED DESCRIPTION OF THE ILLUSTRATED EMBODIMENTS

The components described in the example embodiments may be implemented by hardware components including, for example, at least one digital signal processor (DSP), a processor, a controller, an application-specific integrated circuit (ASIC), a programmable logic element, such as an FPGA, other electronic devices, or combinations thereof. At least some of the functions or the processes described in the example embodiments may be implemented by software, and the software may be recorded on a recording medium. The components, the functions, and the processes described in the example embodiments may be implemented by a combination of hardware and software.

The method according to example embodiments may be embodied as a program that is executable by a computer, and may be implemented as various recording media such as a magnetic storage medium, an optical reading medium, and a digital storage medium.

Various techniques described herein may be implemented as digital electronic circuitry, or as computer hardware, firmware, software, or combinations thereof. The techniques may be implemented as a computer program product, i.e., a computer program tangibly embodied in an information carrier, e.g., in a machine-readable storage device (for example, a computer-readable medium) or in a propagated signal for processing by, or to control an operation of a data processing apparatus, e.g., a programmable processor, a computer, or multiple computers. A computer program(s) may be written in any form of a programming language, including compiled or interpreted languages and may be deployed in any form including a stand-alone program or a module, a component, a subroutine, or other units suitable for use in a computing environment. A computer program may be deployed to be executed on one computer or on multiple computers at one site or distributed across multiple sites and interconnected by a communication network.

Processors suitable for execution of a computer program include, by way of example, both general and special purpose microprocessors, and any one or more processors of any kind of digital computer. Generally, a processor will receive instructions and data from a read-only memory or a random access memory or both. Elements of a computer may include at least one processor to execute instructions and one or more memory devices to store instructions and data. Generally, a computer will also include or be coupled to receive data from, transfer data to, or perform both on one or more mass storage devices to store data, e.g., magnetic, magneto-optical disks, or optical disks. Examples of information carriers suitable for embodying computer program instructions and data include semiconductor memory devices, for example, magnetic media such as a hard disk, a floppy disk, and a magnetic tape, optical media such as a compact disk read only memory (CD-ROM), a digital video disk (DVD), etc. and magneto-optical media such as a floptical disk, and a read only memory (ROM), a random access memory (RAM), a flash memory, an erasable programmable ROM (EPROM), and an electrically erasable programmable ROM (EEPROM) and any other known computer readable medium. A processor and a memory may be supplemented by, or integrated into, a special purpose logic circuit.

The processor may run an operating system (OS) and one or more software applications that run on the OS. The processor device also may access, store, manipulate, process, and create data in response to execution of the software. For purpose of simplicity, the description of a processor device is used as singular; however, one skilled in the art will be appreciated that a processor device may include multiple processing elements and/or multiple types of processing elements. For example, a processor device may include multiple processors or a processor and a controller. In addition, different processing configurations are possible, such as parallel processors.

Also, non-transitory computer-readable media may be any available media that may be accessed by a computer, and may include both computer storage media and transmission media.

The present specification includes details of a number of specific implements, but it should be understood that the details do not limit any invention or what is claimable in the specification but rather describe features of the specific example embodiment. The invention is defined by the appended claims.

Similarly, even though operations are described in a specific order on the drawings, it should not be understood as the operations needing to be performed in the specific order or in sequence to obtain desired results or as all the operations needing to be performed. In a specific case, multitasking and parallel processing may be advantageous. In addition, it should not be understood as requiring a separation of various apparatus components in the above described example embodiments in all example embodiments, and it should be understood that the above-described program components and apparatuses may be incorporated into a single software product or may be packaged in multiple software products.

It should be understood that the example embodiments disclosed herein are merely illustrative and are not intended to limit the scope of the invention. It will be apparent to one of ordinary skill in the art that various modifications of the example embodiments may be made within scope of the claims.

Hereinafter, with reference to the accompanying drawings, embodiments of the present disclosure will be described in detail so that a person skilled in the art can readily carry out the present disclosure. However, the present disclosure may be embodied in many different forms and is not limited to the embodiments described herein.

In the following description of the embodiments of the present disclosure, a detailed description of known functions and configurations incorporated herein will be omitted when it may make the subject matter of the present disclosure rather unclear. Parts not related to the description of the present disclosure in the drawings are omitted, and like parts are denoted by similar reference numerals.

In the present disclosure, components that are distinguished from each other are intended to clearly illustrate each feature. However, it does not necessarily mean that the components are separate. That is, a plurality of components may be integrated into one hardware or software unit, or a single component may be distributed into a plurality of hardware or software units. Thus, unless otherwise noted, such integrated or distributed embodiments are also included within the scope of the present disclosure.

In the present disclosure, components described in the various embodiments are not necessarily essential components, which should be defined by the appended independent claims.

Hereinafter, with reference to the accompanying drawings, embodiments of the present disclosure will be described in detail so that a person skilled in the art can readily carry out the present disclosure. However, the present disclosure may be embodied in many different forms and is not limited to the embodiments described herein.

In the following description of the embodiments of the present disclosure, a detailed description of known functions and configurations incorporated herein will be omitted when it may make the subject matter of the present disclosure rather unclear. Parts not related to the description of the present disclosure in the drawings are omitted, and like parts are denoted by similar reference numerals.

In the present disclosure, when a component is referred to as being "linked," "coupled," or "connected" to another component, it is understood that not only a direct connection relationship but also an indirect connection relationship through an intermediate component may also be included. In addition, when a component is referred to as "comprising" or "having" another component, it may mean further inclusion of another component not the exclusion thereof, unless explicitly described to the contrary.

In the present disclosure, the terms first, second, etc. are used only for the purpose of distinguishing one component from another, and do not limit the order or importance of components, etc., unless specifically stated otherwise. Thus, within the scope of this disclosure, a first component in one exemplary embodiment may be referred to as a second component in another embodiment, and similarly a second component in one exemplary embodiment may be referred to as a first component.

In the present disclosure, components that are distinguished from each other are intended to clearly illustrate each feature. However, it does not necessarily mean that the components are separate. That is, a plurality of components may be integrated into one hardware or software unit, or a single component may be distributed into a plurality of hardware or software units. Thus, unless otherwise noted, such integrated or distributed embodiments are also included within the scope of the present disclosure.

In the present disclosure, components described in the various embodiments are not necessarily essential components, which should be defined by the appended independent claims.

Hereinafter, a four-wheel steering control apparatus and method will be described in detail with reference to the accompanying drawings. In this process, thicknesses of lines and sizes of constituent elements in the drawings may be exaggerated for the clarity and convenience of explanation. Further, the following terms are defined, in consideration of functions thereof in the present disclosure, and may vary according to the intention of a user or an operator and customs. Therefore, the terms should be defined on the basis of the contents of the entire specification.

Further, implementations described in the present specification may be made by, for example, a method or a process, a device, a software program, a data stream, or a signal. Although the implementations are discussed only in the context of a single form (for example, discussed by the method only), the discussed features may also be implemented by another form (for example, a device or a program). The device may be implemented by suitable hardware, software, and firmware. The method may be implemented, for example, in a computer, a microprocessor, an integrated circuit, or a device such as a processor that generally refers to a processing device including a programmable logic device. Further, the processor includes a computer, a cellular phone, and a communication device such as a portable/personal digital assistant (PDA) or another device.

A vehicle described in the present specification may include a four-wheeled independent drive and steering (4WIDS) vehicle.

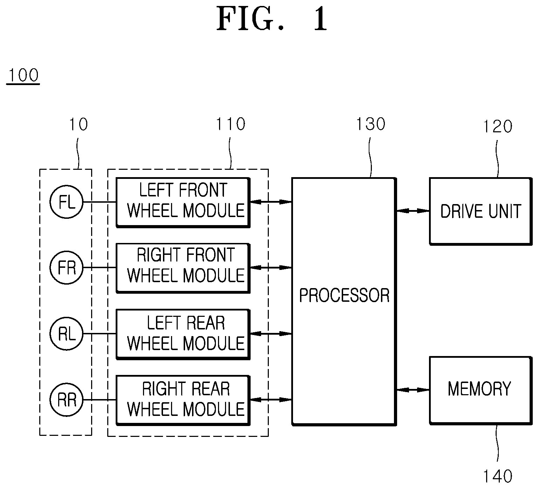

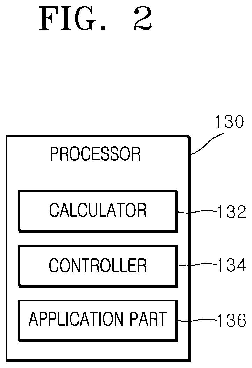

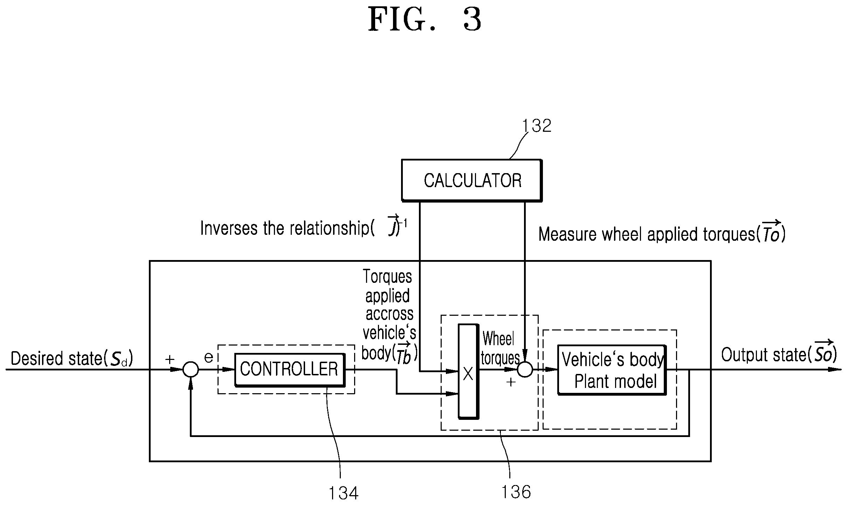

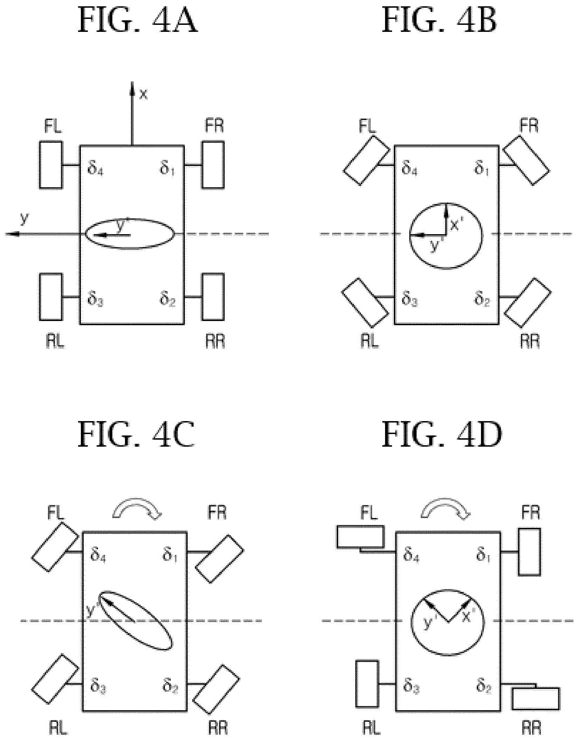

FIG. 1 is a diagram illustrating a four-wheel independent steering control apparatus according to an embodiment of the present disclosure, FIG. 2 is a diagram illustrating the configuration of the processor illustrated in FIG. 1, FIG. 3 is a diagram illustrating the controller and the application part illustrated in FIG. 2, and FIGS. 4A to 4D are example diagrams illustrating wheel topology according to an embodiment of the present disclosure.

Referring to FIG. 1, a four-wheel independent steering control apparatus 100 according to an embodiment of the present disclosure includes wheel steering modules 110, a drive unit 120, a processor 130, and a memory 140.

The memory 140 is a component configured to store data related to operations of the four-wheel independent steering control apparatus 100. In addition, an application program (or an applet) configured to detect a mid-air state on the basis of measured information of a vehicle and adjust propulsion torque and steering geometry of respective wheels 10 according to the mid-air state, or the like, may be stored in the memory 140. The information stored may be selected by the processor 130 as required. That is, various types of data generated during execution of an operating system or an application program (or an applet) for driving the four-wheel independent steering control apparatus 100 are stored in the memory 140. Here, the memory 140 collectively refers to a non-volatile storage device that retains stored information even when power is not supplied and a volatile storage device that requires power to retain stored information.

The wheel steering modules 110 are provided for the wheels 10, respectively, thereby allowing the wheels 10 to be steered independently.

The wheel steering modules 110 include a left front wheel module to steer the front left wheel FL, a right front wheel module to steer the front right wheel FR, a left rear wheel module to steer the rear left wheel RL, and a right rear wheel module to steer the rear right wheel RR.

Each of the wheel steering modules 110 may include a suspension configured to obtain a sufficient gap from the corresponding wheel 10, a high angle drive shaft or in-wheel system, and a steering actuator configured to provide operating force to steer the wheel 10.

The drive unit 120 generates driving force according to the rotation angle of the accelerator pedal to propel the vehicle. The drive unit 120 may propel the vehicle using driving force generated by an engine or a motor.

The processor 130 is configured to detect the mid-air state on the basis of the measured information of the vehicle, and adjust propulsion torques and steering geometries of the wheels 10 according to the mid-air state by means of the wheel steering modules 110. Here, the measured information may include acceleration, speed of rotation, wheel angles, torques, the distance of the vehicle from the ground, and the like. The acceleration $\overrightarrow{a_{cc}}$ may be

$$\begin{bmatrix} a_{ccx} \\ a_{ccy} \\ a_{ccz} \end{bmatrix} = \begin{bmatrix} longitudinal \\ lateral \\ vertical \end{bmatrix}$$ . A rotation speed vector $(\overrightarrow{Vr})$ may be $$\begin{bmatrix} V_X \\ V_y \\ V_z \end{bmatrix} = \begin{bmatrix} roll\ rate \\ pitch\ rate \\ yaw\ rate \end{bmatrix}$$ . A wheel angle vector

$Wa$ may be $$\begin{bmatrix} \delta_1 \\ \delta_2 \\ \delta_3 \\ \delta_4 \end{bmatrix} = \begin{bmatrix} front\ right\ wheel\ angle \\ rear\ right\ wheel\ angle \\ rear\ left\ wheel\ angle \\ front\ left\ wheel\ angle \end{bmatrix}$$ . A wheel/steering application torque $\overrightarrow{To}$ may be

$$\begin{bmatrix} T_1 \\ T_2 \\ T_\delta\ x\ 4 \end{bmatrix} = \begin{bmatrix} front\ right\ wheel\ angle \\ rear\ right\ wheel\ angle \\ individual\ wheel\ steer\ torque \end{bmatrix}$$ . The distance of the vehicle from the ground $h_g$ may be calculated using a GPS, a camera, a radar, LiDAR, or the like. The steering geometry may include positions and angles of the wheels 10.

The processor 130 is configured to detect the mid-air state in consideration of an accelerometer, a gyroscope, computer vision data, and the like, and adjust the propulsion torques and steering geometries of the wheels 10. Interchangeable steering geometry configurations and the adjustment of various reaction torques of the respective wheels 10 may be combined and used as strategies to stabilize or change the direction of the vehicle for optimum touchdown.

The above-described processor 130 includes a calculator 132, a controller 134, and an application part 136 as illustrated in FIG. 2.

The calculator 132 is configured to determine at least one mid-air state of a free-fall state and a hovering state on the basis of at least one of the acceleration and the distance of the vehicle from the ground included in the measured information, set wheel positions according to the wheel topology corresponding to the determined mid-air state, and calculate the relationship between the wheels 10 and vehicle's body torques on the basis of the set wheel positions.

When the vehicle is in the mid-air state, the processor 130 may set the front right wheel and the rear left wheel as a first wheel pair, set the front left wheel and the rear right wheel as a second wheel pair, and instruct a symmetric movement of the first wheel pair and the second wheel pair. Thus, the processor 130 may consider only two axes instead of four axes in which wheel reaction torque may be generated. Afterwards, the processor 130 may divide the steering motion of the first wheel pair and the second wheel pair into a first sub-movement a in which the first wheel pair and the second wheel pair move in opposite directions and a second sub-movement β in which the first wheel pair and the second wheel pair move in the same direction.

The first sub-movement a may be calculated as in Equation 1 below, and the second sub-movement β may be calculated as in Equation 2 below.

[Equation 1]

$$\alpha = \frac{(\delta_1 + \delta_3) - (\delta_2 + \delta_4)}{.}$$

.

[Equation 2]

$$\beta = \frac{(\delta_1 + \delta_3) + (\delta_2 + \delta_4)}{4}$$

Here, $\delta_1$ may indicate the angle of the front right wheel, $\delta_2$ may indicate the angle of the rear right wheel, $\delta_3$ may indicate the angle of the front left wheel, and $\delta_4$ may indicate the angle of the rear left wheel.

The adjusted first sub-movement a and second sub-movement β may affect to the direction of the vehicle (the directions of the wheels) in mid-air in a variety of manners on the basis of the wheel topology as illustrated in FIGS. 4A to 4D.

Referring to FIGS. 4A to 4D, the wheel topology include first wheel topology (a) (FIG. 4A) in which the first sub-movement is 0° and the second sub-movement is 0°, second wheel topology (b) (FIG. 4B) in which the first sub-movement is 45° and the second sub-movement is 0°, third wheel topology (c) (FIG. 4C) in which the first sub-movement is 0° and the second sub-movement is 45°, and fourth wheel topology (d) (FIG. 4D) in which the first sub-movement is 45° and the second sub-movement is 45°.

The first topology (a) is a configuration for allocating net reaction torque around the y axis of the vehicle base. The first topology (a) may be configured to control the pitch motion without affecting directions of yaw and roll. In this case, the front right wheel FR and the rear left wheel RL may be 0° ($\delta_1=\delta_3=0°$), while the front left wheel FL and the rear right wheel RR may be 0° ($\delta_2=\delta_4=0°$).

The second topology (b) is configured to equalize authority over the pitch and roll (y' axis and x' axis) by adjusting the first sub-movement and control the yaw motion by adjusting the second sub-movement. In this case, the front right wheel FR and the rear left wheel RL may be 45° ($\delta_1=\delta_3=45°$), while the front left wheel FL and the rear right wheel RR may be -45° ($\delta_2=\delta_4=-45°$).

The third topology (c) may change orthogonal control authority over the pitch (y axis) and control the yaw motion (z axis) of the vehicle base by adjusting the second sub-movement. In this case, the front right wheel FR and the rear left wheel RL may be -45° ($\delta_1=\delta_3=-45°$), while the front left wheel FL and the rear right wheel RR may be -45° ($\delta_2=\delta_4=-45°$).

The fourth topology (d) is configured to change orthogonal control authority over the roll (x axis) and the pitch (y axis) and control the yaw motion (z axis) of the vehicle base by adjusting the second sub-movement. In this case, the front right wheel FR and the rear left wheel RL may be 0° ($\delta_1=\delta_3=0°$), while the front left wheel FL and the rear right wheel RR may be -90° ($\delta_2=\delta_4=-90°$).

When the mid-air state is a free-fall state, the calculator 132 is configured to determine the wheel topology to be the second wheel topology and set the wheel positions according to the second wheel topology. Here, when the value of the z-axis acceleration axxz is 'zero (0)', the calculator 132 determines the mid-air state to be the free-fall state.

In addition, when the mid-air state is a hovering state, the calculator 132 determines the wheel topology to be the fourth wheel topology and sets the wheel positions according to the fourth wheel topology. Here, when the distance of the vehicle from the ground is equal to or greater than a predetermined vehicle height limit threshold and is maintained for a predetermined threshold time or longer, the calculator 132 determines the mid-air state to be the hovering state.

When the wheel positions are set according to the wheel topology, the calculator 132 calculates the relationship between the wheels 10 and the vehicle's body torques on the basis of the set wheel positions. Here, the calculator 132 may calculate the relationship between the wheels 10 and the vehicle's body torques using Jacobian matrix. That is, the calculator 132 may calculate the relationship $\vec{J}$ between the wheels 10 and the vehicle's body torques using Equation 3 below.

[Equation 3]

$$\vec{J} = \begin{bmatrix} 2\sin(\alpha+\beta) & 2\sin(\alpha-\beta) & 0 \\ -2\cos(\alpha+\beta) & 2\cos(\alpha-\beta) & 0 \\ 0 & 0 & 1/4 \end{bmatrix}$$

Here, $\vec{J}$ may be configuration-dependent Jacobian among the respective wheels 10, steering torques, and instantaneous base roll, pitch, and yaw torques. In addition, it is assumed that Jacobian vector is generated by assuming symmetrical application of inertia effect and torque and the same torque $T_\delta$ is applied to all steering joints.

The controller 134 may calculate torques applied across the vehicle's body $T_b$ on the basis of the difference between a desired states vector $\vec{S_d}$ and an output states vector $\vec{S_o}$ of a vehicle's body plant model. Here, the controller 134 may use a control algorithm such as PD, PI, PID, LQI, or LQR, which may vary according to available calculating power and system design.

As illustrated in FIG. 3, the controller 134 may receive the difference e between the desired states vector $\vec{S_d},$ $\begin{bmatrix} \varphi_d \\ \theta_d \\ \psi_d \end{bmatrix} = \begin{bmatrix} roll \\ pitch \\ yaw \end{bmatrix} = 0$ and the output states vector $\vec{S_o}$ of the vehicle's body plant model and output the torques applied across the vehicle's body $Tb, \begin{bmatrix} T_x \\ T_y \\ T_\delta \end{bmatrix} = \begin{bmatrix} roll\ torque \\ pitch\ torque \\ yaw\ (steer)\ torque \end{bmatrix}$ by applying the control algorithm to the received difference e.

The application part 136 may calculate wheel torques by applying the torques applied across the vehicle's body $T_b$, i.e., the output of the controller 134, to the inversed relationship ($\vec{J}^{-1}$) between the wheels 10 and the vehicle's body torques. Afterwards, the application part 136 may calculate the calculated wheel torques and measured wheel applied torques ($\vec{To}$) included in the measured information and apply the calculated torques to the vehicle's body plant model. Here, the vehicle's body plant model may be a kinematic model.

The vehicle's body plant model may output the output states vector $\overrightarrow{S_o}$. The output states vector may be

$$\begin{bmatrix} \varphi_o \\ \theta_o \\ \psi_o \end{bmatrix} = \begin{bmatrix} roll \\ pitch \\ yaw \end{bmatrix}.$$

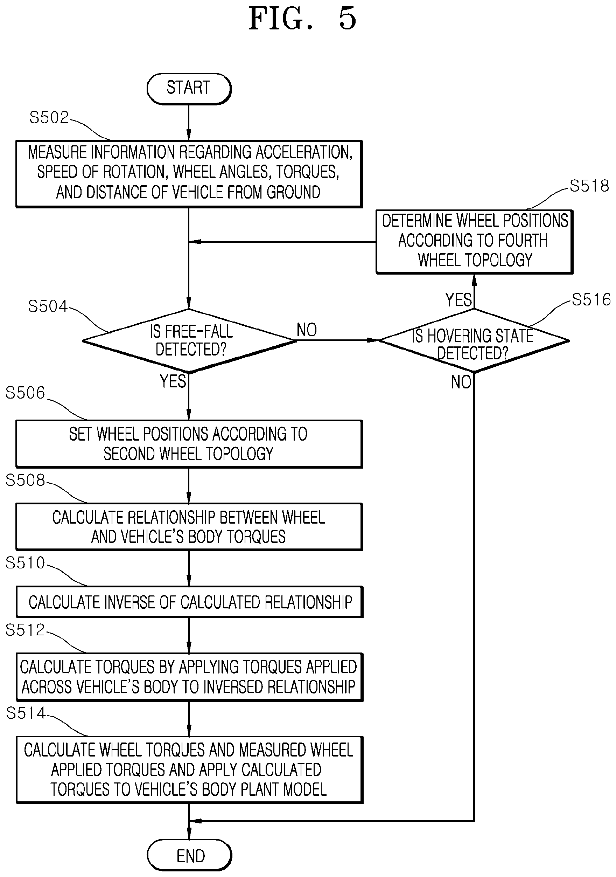

FIG. 5 is a flowchart illustrating a four-wheel independent steering control method according to an embodiment of the present disclosure.

Referring to FIG. 5, the processor 130 measures information, such as acceleration, speed of rotation, wheel angles, torques, the distance of the vehicle from the ground, and the like in S502.

When the step S502 is performed, the processor 130 determined whether or not a free-fall state is detected on the basis of the measured information in S504. Here, when the z-axis acceleration $a_{xxz}$ is '0', the processor 130 determines that the free-fall state is detected.

When the free-fall state is detected as the result of the S504 step, the processor 130 sets wheel positions according to the second wheel topology in S506. Here, the processor 130 may set the first sub-movement to be 45° and the second sub-movement to be 0° by setting the front right wheel and the rear left wheel to be 45° ($\delta_1=\delta_3=45°$) and the front left wheel and the rear right wheel to be -45° ($\delta_2=\delta_4=-45°$).

When the S506 step is performed, the processor 130 calculates the relationship between the wheels 10 and the vehicle's body torques on the basis of the set wheel positions in S508, and calculates the inverse of the calculated relationship in S510. Here, the processor 130 may calculate the relationship between wheels 10 and the vehicle's body torques using the configuration-dependent Jacobian among the respective wheels 10, steering torques, and instantaneous base roll, pitch, and yaw torques.

When the S510 is performed, wheel torques are calculated by applying the torques applied across the vehicle's body $T_b$, calculated on the basis of the difference between a desired states vector $\overrightarrow{S_d}$ and an output states vector $\overrightarrow{S_o}$ of the vehicle's body plant model, to the inversed relationship in step S512. Here, the controller 134 may calculate the difference e between the desired states vector $\overrightarrow{S_d}$, $\begin{bmatrix} \varphi_d \\ \theta_d \\ \psi_d \end{bmatrix} = \begin{bmatrix} roll \\ pitch \\ yaw \end{bmatrix} = 0$ and the output states vector of the vehicle's body plant model and output the torques applied across the vehicle's body by applying the control algorithm to the received difference e.

When the step S512 is performed, the processor 130 may calculate the calculated wheel torques and the measured wheel applied torques ($\overrightarrow{To}$) included in the measured information and apply the calculated torques to the vehicle's body plant model in S514.

When the free-fall state is not detected as the result of the S504 step, the processor 130 determines whether or not a hovering state is detected in S516. Here, when the distance of the vehicle from the ground is equal to or greater than a predetermined vehicle height limit threshold and is maintained for a predetermined threshold time or longer, the calculator 132 determines the mid-air state to be the hovering state.

When the hovering state is detected as the result of the determination of step S516, the processor 130 sets the wheel positions according to the fourth wheel topology in S518 and performs the step S504. Here, the processor 130 may set the first sub-movement to be 45° and the second sub-movement to be -45° by setting the front right wheel and the rear left wheel to be 0° ($\delta_1=\delta_3=0°$) and the front left wheel and the rear right wheel to be -90° ($\delta_2=\delta_4=-90°$).

As set forth above, the four-wheel independent steering control apparatus and method according to an aspect of the present disclosure may adjust the direction of the vehicle (the directions of the wheels) in mid-air by adjusting the wheel torques and the steering geometries in mid-air. Touchdown parallel to the ground and load distribution proportional to four wheels may be ensured. The risk of landing upside down in the touchdown may be minimized. The reliability of the vehicle may be improved, and thus steering correction efforts required to the driver may be minimized.

Although exemplary embodiments of the disclosure have been disclosed for illustrative purposes, those skilled in the art will appreciate that various modifications, additions and substitutions are possible, within the scope as defined in the accompanying claims. Thus, the true technical scope of the disclosure should be defined by the following claims.

**Claims**

**1.** A four-wheel independent steering control apparatus comprising:

wheel steering modules (110) configured to independently steer respective wheels of a vehicle; and
a processor (130) configured to detect a mid-air state on the basis of measured information of the vehicle and adjust propulsion torques and steering geometries of the wheels according to the mid-air state by means of the wheel steering modules,
wherein the processor comprises:

a calculator (132) configured to determine at least one mid-air state of a free-fall state and a hovering state on the basis of at least one of acceleration and a distance of the vehicle from the ground included in the measured information, set wheel positions according to the wheel topology corresponding to the determined mid-air state, and calculate the relationship between the wheels and vehicle's body torques on the basis of the set wheel positions,

a controller (134) configured to calculate torques applied across vehicle's body on the basis of a difference between a desired states vector and an output states vector of a vehicle's body plant mode; and

an application part (136) configured to calculate wheel torques by applying the calculated torques applied across vehicle's body to the relationship between the wheels and the vehicle's body torques, calculate the calculated wheel torques and torques included in the measured information, and apply the calculated torques to the vehicle's body plant model,

wherein the wheel topology comprises second wheel topology in which the first sub-movement is 45° and a second sub-movement is 0° and fourth wheel topology in which the first sub-movement is 45° and the second sub-movement is 45°,

wherein when a value of the z-axis acceleration (axxz) is 0, the calculator determines the mid-air state to be the free-fall state and the wheel topology to be the second wheel topology, and

when the distance of the vehicle from the ground is equal to or greater than a predetermined vehicle height limit threshold and is maintained a predetermined threshold time or longer, the calculator determines the mid-air state to be the hovering state and the wheel topology to be the fourth wheel topology.

2. The four-wheel independent steering control apparatus according to claim 1, wherein the measured information comprises at least one from among acceleration, speed of rotation, wheel angles, torques, a distance of the vehicle from the ground.

3. The four-wheel independent steering control apparatus according to claim 1 or 2, wherein the processor is configured to:

set a front right wheel and a rear left wheel to be a first wheel pair;
set a front left wheel and a rear right wheel to be a second wheel pair;
instruct a symmetric movement of the first wheel pair and the second wheel pair; and
divide a steering motion of the first wheel pair and the second wheel pair into a first sub-movement in which the first wheel pair and the second wheel pair move in opposite directions and a second sub-movement in which the first wheel pair and the second wheel pair move in the same direction.

4. The four-wheel independent steering control apparatus according to any one of claims 1 to 3, wherein the wheel topology further comprises at least one of first wheel topology in which a first sub-movement is 0° and the second sub-movement is 0°, third wheel topology in which the first sub-movement is 0°.

5. The four-wheel independent steering control apparatus according to claim 4, wherein the first topology is configured to control a pitch motion without affecting directions of yaw and roll, wherein the front right wheel and the rear left wheel are 0°, while the front left wheel and the rear right wheel RR are 0°,

the second wheel topology is configured to equalize authority over the pitch and roll (y' axis and x' axis) by adjusting the first sub-movement and control the yaw motion by adjusting the second sub-movement, wherein the front right wheel and the rear left wheel are 45°, while the front left wheel and the rear right wheel are -45°,

the third topology is configured to change orthogonal control authority over the pitch (y axis) and control the yaw motion (z axis) of a vehicle base by adjusting the second sub-movement, wherein the front right wheel and the rear left wheel are -45°, while the front left wheel and the rear right wheel are -45°, and

the fourth topology is configured to change orthogonal control authority over the roll (x axis) and the pitch (y axis) and control the yaw motion (z axis) of the vehicle base by adjusting the second sub-movement, wherein the front right wheel and the rear left wheel are 0° ($\delta_1=\delta_3=0°$), while the front left wheel and the rear right wheel are -90°.

6. The four-wheel independent steering control apparatus according to any one of claims 1 to 5, wherein the application part is configured to inverse the relationship between the wheels and the vehicle's body torques and apply torques applied across a vehicle's body to the inversed relationship.

7. A four-wheel independent steering control method comprising:

detecting, by a processor, a mid-air state on the basis of measured information of a vehicle;

setting, by the processor, wheel positions according to a wheel topology corresponding to the mid-air state;

calculating, by the processor, a relationship between wheels and vehicle's body torques on the basis of the set wheel positions and inversing the calculated relationship;

calculating torques applied across vehicle's body on the basis of a difference between a desired states vector and an output states vector of a vehicle's body plant mode;

calculating wheel torques by applying torques applied across a vehicle's body to the inversed relationship;

calculating the calculated wheel torques and torques included in the measured information, and applying the calculated torques to the vehicle's body plant model,

wherein the wheel topology comprises second wheel topology in which the first sub-movement is 45° and the second sub-movement is 0° and fourth wheel topology in which the first sub-movement is 45° and the second sub-movement is 45°,

wherein the processor is configured to determine at least one mid-air state of a free-fall state and a hovering state on the basis of at least one of acceleration and a distance of the vehicle from the ground included in the measured information, set wheel positions according to the wheel topology corresponding to the determined mid-air state, and calculate the relationship between the wheels and vehicle's body torques on the basis of the set wheel positions, and

wherein when a value of the z-axis acceleration (axxz) is 0, the processor determines the mid-air state to be the free-fall state and the wheel topology to be second wheel topology, and

when the distance of the vehicle from the ground is equal to or greater than a predetermined vehicle height limit threshold and is maintained a predetermined threshold time or longer, the processor determines the mid-air state to be the hovering state and the wheel topology to be fourth wheel topology.

**Patentansprüche**

1. Unabhängige Vierradlenksteuerungsvorrichtung, umfassend:

Radlenkmodule (110), die dazu eingerichtet sind, jeweilige Räder eines Fahrzeugs unabhängig zu lenken; und einen Prozessor (130), der dazu eingerichtet ist, einen Zustand in der Luft auf der Grundlage von gemessenen Informationen des Fahrzeugs zu erfassen und Antriebsdrehmomente und Lenkgeometrien der Räder gemäß dem Zustand in der Luft mittels der Radlenkmodule anzupassen,

wobei der Prozessor umfasst:

einen Rechner (132), der dazu eingerichtet ist, mindestens einen Zustand in der Luft aus einem Zustand des freien Falls und einem Schwebezustand auf der Grundlage von mindestens einem von Beschleunigung und Abstand des Fahrzeugs vom Boden, die in den gemessenen Informationen enthalten sind, zu bestimmen, Radstellungen gemäß der Radtopologie festzulegen, die dem bestimmten Zustand in der Luft entspricht, und die Beziehung zwischen den Rädern und Karosseriedrehmomenten auf der Grundlage der festgelegten Radstellungen zu berechnen,

eine Steuerung (134), die dazu eingerichtet ist, über eine Fahrzeugkarosserie aufgebrachte Drehmomente auf der Grundlage einer Differenz zwischen einem Sollzustandsvektor und einem Ausgangszustandsvektor eines Fahrzeugkarosserie-Streckenmodells zu berechnen; und

ein Anwendungsteil (136), das dazu eingerichtet ist, Raddrehmomente zu berechnen, indem die berechneten über eine Fahrzeugkarosserie aufgebrachten Drehmomente auf die Beziehung zwischen den Rädern und den Karosseriedrehmomenten angewendet werden, die berechneten Raddrehmomente und die in den gemessenen Informationen enthaltenen Drehmomente zu berechnen und die berechneten Drehmomente auf das Fahrzeugkarosserie-Streckenmodell anzuwenden,

wobei die Radtopologie eine zweite Radtopologie, in der die erste Teilbewegung 45° beträgt und eine zweite Teilbewegung 0° beträgt, und eine vierte Radtopologie umfasst, in der die erste Teilbewegung 45° beträgt und die zweite Teilbewegung 45° beträgt,

wobei, wenn ein Wert der z-Achsen-Beschleunigung (axxz) 0 ist, der Rechner bestimmt, dass der Zustand in der Luft der Zustand des freien Falls ist und die Radtopologie die zweite Radtopologie ist, und

wenn der Abstand des Fahrzeugs vom Boden gleich oder größer als ein vorbestimmter Fahrzeughöhengrenzschwellenwert ist und für eine vorbestimmte Schwellenzeit oder länger aufrechterhalten wird, der Rechner bestimmt, dass der Zustand in der Luft der Schwebezustand ist und die Radtopologie die vierte Radtopologie ist.

**2.** Unabhängige Vierradlenksteuerungsvorrichtung nach Anspruch 1, wobei die gemessenen Informationen mindestens eines von Beschleunigung, Drehzahl, Radwinkeln, Drehmomenten und einem Abstand des Fahrzeugs vom Boden umfassen.

**3.** Unabhängige Vierradlenksteuerungsvorrichtung nach Anspruch 1 oder 2, wobei der Prozessor eingerichtet ist zum:

Festlegen eines vorderen rechten Rads und eines hinteren linken Rads als ein erstes Radpaar;
Festlegen eines vorderen linken Rads und eines hinteren rechten Rads als ein zweites Radpaar;
Anweisen einer symmetrischen Bewegung des ersten Radpaars und des zweiten Radpaars; und
Unterteilen einer Lenkbewegung des ersten Radpaars und des zweiten Radpaars in eine erste Teilbewegung, bei der sich das erste Radpaar und das zweite Radpaar in entgegengesetzte Richtungen bewegen, und eine zweite Teilbewegung, bei der sich das erste Radpaar und das zweite Radpaar in die gleiche Richtung bewegen.

**4.** Unabhängige Vierradlenksteuerungsvorrichtung nach einem der Ansprüche 1 bis 3, wobei die Radtopologie ferner eine erste Radtopologie, in der eine erste Teilbewegung 0° beträgt und die zweite Teilbewegung 0° beträgt, und/oder eine dritte Radtopologie umfasst, in der die erste Teilbewegung 0° beträgt.

**5.** Unabhängige Vierradlenksteuerungsvorrichtung nach Anspruch 4, wobei die erste Radtopologie dazu eingerichtet ist, eine Nickbewegung zu steuern, ohne Gier- und Rollrichtungen zu beeinflussen, wobei das vordere rechte Rad und das hintere linke Rad 0° betragen, während das vordere linke Rad und das hintere rechte Rad, RR, 0° betragen,

die zweite Radtopologie dazu eingerichtet ist, eine Steuerautorität über das Nicken und Rollen (y'-Achse und x'-Achse) durch Anpassen der ersten Teilbewegung auszugleichen und die Gierbewegung durch Anpassen der zweiten Teilbewegung zu steuern, wobei das vordere rechte Rad und das hintere linke Rad 45° betragen, während das vordere linke Rad und das hintere rechte Rad -45° betragen,
die dritte Radtopologie dazu eingerichtet ist, eine orthogonale Steuerautorität über das Nicken (y-Achse) zu ändern und die Gierbewegung (z-Achse) einer Fahrzeugbasis durch Anpassen der zweiten Teilbewegung zu steuern, wobei das vordere rechte Rad und das hintere linke Rad -45° betragen, während das vordere linke Rad und das hintere rechte Rad -45° betragen, und
die vierte Radtopologie dazu eingerichtet ist, die orthogonale Steuerautorität über das Rollen (x-Achse) und das Nicken (y-Achse) zu ändern und die Gierbewegung (z-Achse) der Fahrzeugbasis durch Anpassen der zweiten Teilbewegung zu steuern, wobei das vordere rechte Rad und das hintere linke Rad 0° betragen ($\delta_1=\delta_3=0°$), während das vordere linke Rad und das hintere rechte Rad -90° betragen.

**6.** Unabhängige Vierradlenksteuerungsvorrichtung nach einem der Ansprüche 1 bis 5, wobei das Anwendungsteil dazu eingerichtet ist, die Beziehung zwischen den Rädern und den Karosseriedrehmomenten zu invertieren und über eine Fahrzeugkarosserie aufgebrachte Drehmomente auf die invertierte Beziehung anzuwenden.

**7.** Unabhängiges Vierradlenksteuerungsverfahren, umfassend:

Erfassen eines Zustands in der Luft auf der Grundlage von gemessenen Informationen eines Fahrzeugs durch einen Prozessor;
Festlegen von Radstellungen gemäß einer Radtopologie, die dem Zustand in der Luft entspricht, durch den Prozessor;
Berechnen einer Beziehung zwischen Rädern und Karosseriedrehmomenten auf der Grundlage der festgelegten Radstellungen und Invertieren der berechneten Beziehung durch den Prozessor;
Berechnen von über eine Fahrzeugkarosserie aufgebrachten Drehmomenten auf der Grundlage einer Differenz zwischen einem Sollzustandsvektor und einem Ausgangszustandsvektor eines Fahrzeugkarosserie-Streckenmodells;
Berechnen von Raddrehmomenten durch Anwenden von über eine Fahrzeugkarosserie aufgebrachten Drehmomenten auf die invertierte Beziehung;
Berechnen der berechneten Raddrehmomente und der in den gemessenen Informationen enthaltenen Drehmomente und Anwenden der berechneten Drehmomente auf das Fahrzeugkarosserie-Streckenmodell,
wobei die Radtopologie eine zweite Radtopologie, in der die erste Teilbewegung 45° beträgt und die zweite Teilbewegung 0° beträgt, und eine vierte Radtopologie umfasst, in der die erste Teilbewegung 45° beträgt und die zweite Teilbewegung 45° beträgt,

wobei der Prozessor dazu eingerichtet ist, mindestens einen Zustand in der Luft aus einem Zustand des freien Falls und einem Schwebezustand auf der Grundlage von mindestens einem von Beschleunigung und Abstand des Fahrzeugs vom Boden, die in den gemessenen Informationen enthalten sind, zu bestimmen, Radstellungen gemäß der Radtopologie festzulegen, die dem bestimmten Zustand in der Luft entspricht, und die Beziehung zwischen den Rädern und Karosseriedrehmomenten auf der Grundlage der festgelegten Radstellungen zu berechnen, und

wobei, wenn ein Wert der z-Achsen-Beschleunigung (axxz) 0 ist, der Prozessor bestimmt, dass der Zustand in der Luft der Zustand des freien Falls ist und die Radtopologie die zweite Radtopologie ist, und

wenn der Abstand des Fahrzeugs vom Boden gleich oder größer als ein vorbestimmter Fahrzeughöhengrenzschwellenwert ist und für eine vorbestimmte Schwellenzeit oder länger aufrechterhalten wird, der Prozessor bestimmt, dass der Zustand in der Luft der Schwebezustand ist und die Radtopologie die vierte Radtopologie ist.

## Revendications

1. Appareil de commande de direction indépendante à quatre roues, comprenant:

   des modules de direction de roues (110) conçus pour diriger indépendamment les roues respectives d'un véhicule; et

   un processeur (130) conçu pour détecter un état de suspension sur la base d'informations mesurées du véhicule et pour ajuster les couples de propulsion et les géométries de direction des roues en fonction de l'état de suspension à l'aide des modules de direction des roues,

   dans lequel le processeur comprend:

   un calculateur (132) configuré pour déterminer au moins un état de suspension entre un état de chute libre et un état stationnaire sur la base d'au moins une parmi l'accélération et la distance du véhicule par rapport au sol incluses dans les informations mesurées, pour définir les positions des roues en fonction de la topologie des roues correspondant à l'état en suspension déterminé, et pour calculer la relation entre les couples des roues et ceux de la carrosserie du véhicule sur la base des positions définies des roues,

   un contrôleur (134) configuré pour calculer les couples appliqués à la carrosserie du véhicule sur la base de la différence entre un vecteur d'états souhaités et un vecteur d'états de sortie du modèle de système de la carrosserie du véhicule; et

   une partie d'application (136) configurée pour calculer les couples de roue en appliquant les couples calculés exercés sur la carrosserie du véhicule à la relation entre les couples des roues et ceux de la carrosserie, pour calculer les couples de roue et les couples inclus dans les informations mesurées, et pour appliquer les couples calculés au modèle de carrosserie du véhicule,

   dans lequel la topologie de roue comprend une deuxième topologie de roue dans laquelle le premier sous-mouvement est de 45° et le deuxième sous-mouvement est de 0°, ainsi qu'une quatrième topologie de roue dans laquelle le premier sous-mouvement est de 45° et le deuxième sous-mouvement est de 45°,

   dans lequel, lorsque la valeur de l'accélération sur l'axe z (axxz) est égale à 0, le calculateur détermine que l'état en suspension est l'état de chute libre et que la topologie des roues correspond à la deuxième topologie, et

   lorsque la distance entre le véhicule et le sol est supérieure ou égale à un seuil prédéterminé de hauteur maximale du véhicule et qu'elle est maintenue pendant un temps prédéterminé ou plus, le calculateur détermine que l'état en suspension est l'état stationnaire et que la topologie des roues est la topologie à quatre roues.

2. Appareil de commande de direction indépendante à quatre roues selon la revendication 1, dans lequel les informations mesurées comprennent au moins l'un élément parmi l'accélération, la vitesse de rotation, les angles des roues, les couples, la distance entre le véhicule et le sol.

3. Appareil de commande de direction indépendante à quatre roues selon la revendication 1 ou 2, dans lequel le processeur est configuré pour:

   définir la roue avant droite et la roue arrière gauche comme première paire de roues;
   définir la roue avant gauche et la roue arrière droite comme une deuxième paire de roues;
   provoquer un mouvement symétrique de la première paire de roues et de la deuxième paire de roues; et
   diviser un mouvement de direction de la première paire de roues et de la deuxième paire de roues en un premier sous-mouvement, au cours duquel la première paire de roues et la deuxième paire de roues se déplacent en sens inverse et en un deuxième sous-mouvement, au cours duquel la première paire de roues et la deuxième paire de roues se déplacent dans la même direction.

4.  Appareil de commande de direction indépendante à quatre roues selon l'une quelconque des revendications 1 à 3, dans lequel la topologie de roue comprend en outre au moins l'une parmi une première topologie de roue dans laquelle un premier sous-mouvement est de 0° et le deuxième sous-mouvement est de 0°, une troisième topologie de roue dans laquelle le premier sous-mouvement est de 0°.

5.  Appareil de commande de système de direction indépendante à quatre roues selon la revendication 4, dans lequel la première topologie est configurée pour commander un mouvement de tangage sans affecter les directions de lacet et de roulis, la roue avant droite et la roue arrière gauche étant à 0°, tandis que la roue avant gauche et la roue arrière droite RR sont à 0°,

    la topologie de la deuxième roue est configurée pour équilibrer l'autorité sur le tangage et le roulis (axes y' et x') en ajustant le premier sous-mouvement, et pour commander le mouvement de lacet en ajustant le deuxième sous-mouvement, la roue avant droite et la roue arrière gauche formant un angle de 45°, tandis que la roue avant gauche et la roue arrière droite forment un angle de -45°,
    la troisième topologie est configurée pour modifier l'autorité de commande orthogonale sur le tangage (axe y) et pour commander le mouvement de lacet (axe z) d'une base de véhicule en ajustant le deuxième sous-mouvement, dans lequel la roue avant droite et la roue arrière gauche sont à -45°, tandis que la roue avant gauche et la roue arrière droite sont à -45°, et
    la quatrième topologie est configurée pour modifier l'autorité de commande orthogonale sur le roulis (axe x) et le tangage (axe y) et pour commander le mouvement de lacet (axe z) de la base du véhicule en ajustant le deuxième sous-mouvement, dans lequel la roue avant droite et la roue arrière gauche sont à 0° ($\delta_1 = \delta_3 = 0°$), tandis que la roue avant gauche et la roue arrière droite sont à -90°.

6.  Appareil de commande de direction indépendante à quatre roues selon l'une quelconque des revendications 1 à 5, dans lequel la partie d'application est configurée pour inverser la relation entre les couples des roues et ceux de la carrosserie du véhicule, et pour appliquer les couples appliquée sur la carrosserie du véhicule à cette relation inversée.

7.  Procédé de commande de direction indépendante à quatre roues comprenant:

    la détection, par un processeur, d'un état en suspension sur la base des informations mesurées d'un véhicule;
    la définition, par le processeur, des positions de roue selon une topologie de roue correspondant à l'état en suspension;
    le calcul, par le processeur, d'une relation entre les roues et les couples de la carrosserie du véhicule sur la base des positions de roue définies et l'inversion de la relation calculée;
    le calcul des couples appliqués à la carrosserie du véhicule sur la base de la différence entre un vecteur d'états souhaités et un vecteur d'états de sortie du modèle de système de la carrosserie du véhicule;
    le calcul des couples de roue en appliquant les couples appliqués à la carrosserie du véhicule à la relation inverse;
    le calcul des couples de roue calculés et des couples inclus dans les informations mesurées, et l'application des couples calculés au modèle de système de carrosserie de véhicule,
    dans lequel la topologie de roue comprend une deuxième topologie de roue dans laquelle le premier sous-mouvement est de 45° et le deuxième sous-mouvement est de 0°, ainsi qu'une quatrième topologie de roue dans laquelle le premier sous-mouvement est de 45° et le deuxième sous-mouvement est de 45°,
    dans lequel le processeur est configuré pour déterminer au moins un état de suspension entre un état de chute libre et un état stationnaire sur la base d'au moins une parmi l'accélération et la distance du véhicule par rapport au sol incluses dans les informations mesurées, pour définir les positions des roues en fonction de la topologie des roues correspondant à l'état en suspension déterminé, et pour calculer la relation entre les couples des roues et ceux de la carrosserie du véhicule sur la base des positions définies des roues, et
    dans lequel, lorsque la valeur de l'accélération sur l'axe z (axxz) est égale à 0, le processeur détermine que l'état en suspension est l'état de chute libre et que la topologie des roues correspond à la deuxième topologie, et
    lorsque la distance entre le véhicule et le sol est supérieure ou égale à un seuil prédéterminé de hauteur maximale du véhicule et qu'elle est maintenue pendant un temps prédéterminé ou plus, le processeur détermine que l'état en suspension est l'état stationnaire et que la topologie de roue est la quatrième topologie de roue.

# FIG. 1

100

| 10 | 110 | 130 | 120 |

```
┌ ─ ─ ─ ┐  ┌ ─ ─ ─ ─ ─ ─ ─ ─ ─ ┐
│ (FL)──┼──┤  LEFT FRONT       ├◄──►┌──────────┐      ┌──────────────┐
│       │  │  WHEEL MODULE     │    │          │◄────►│  DRIVE UNIT  │
│       │  ├───────────────────┤    │          │      └──────────────┘
│ (FR)──┼──┤  RIGHT FRONT      ├◄──►│          │
│       │  │  WHEEL MODULE     │    │          │
│       │  ├───────────────────┤    │ PROCESSOR│
│ (RL)──┼──┤  LEFT REAR        ├◄──►│          │
│       │  │  WHEEL MODULE     │    │          │
│       │  ├───────────────────┤    │          │◄────►┌──────────────┐
│ (RR)──┼──┤  RIGHT REAR       ├◄──►│          │      │   MEMORY     │
│       │  │  WHEEL MODULE     │    └──────────┘      └──────────────┘
└ ─ ─ ─ ┘  └ ─ ─ ─ ─ ─ ─ ─ ─ ─ ┘                           │
                                                           140
```

# FIG. 2

# FIG. 3

CALCULATOR — 132

Inverses the relationship( $\vec{J}^{-1}$ )

Measure wheel applied torques( $\vec{To}$ )

Desired state( $S_d$ )    +    e    CONTROLLER    Torques applied accross vehicle's body( $\vec{Tb}$ )

X    Wheel torques    +    Vehicle's body Plant model    Output state( $\vec{So}$ )

134    136

EP 4 470 819 B1

FIG. 4A

FIG. 4B

FIG. 4C

FIG. 4D

# FIG. 5

START

S502
MEASURE INFORMATION REGARDING ACCELERATION, SPEED OF ROTATION, WHEEL ANGLES, TORQUES, AND DISTANCE OF VEHICLE FROM GROUND

S518
DETERMINE WHEEL POSITIONS ACCORDING TO FOURTH WHEEL TOPOLOGY

S504
IS FREE-FALL DETECTED?

NO

YES

S516
IS HOVERING STATE DETECTED?

YES

NO

S506
SET WHEEL POSITIONS ACCORDING TO SECOND WHEEL TOPOLOGY

S508
CALCULATE RELATIONSHIP BETWEEN WHEEL AND VEHICLE'S BODY TORQUES

S510
CALCULATE INVERSE OF CALCULATED RELATIONSHIP

S512
CALCULATE TORQUES BY APPLYING TORQUES APPLIED ACROSS VEHICLE'S BODY TO INVERSED RELATIONSHIP

S514
CALCULATE WHEEL TORQUES AND MEASURED WHEEL APPLIED TORQUES AND APPLY CALCULATED TORQUES TO VEHICLE'S BODY PLANT MODEL

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102274120

**Non-patent literature cited in the description**

- Dynamics and Aerial Attitude Control for Rapid Emergency Deployment of the Agile Ground Robot AGRO. **DANIEL J GONYALEZ et al.** ARXIV. ORG. CORNELL UNIVERSITY LIBARARY, 05 July 2020